(19) Europäisches Patentamt
European Patent Office
Office européen des brevets

(11) Veröffentlichungsnummer: **0 170 011**
**B1**

(12) # EUROPÄISCHE PATENTSCHRIFT

(45) Veröffentlichungstag der Patentschrift: **26.10.88**

(51) Int. Cl.⁴: **C 07 F 7/18**, C 08 K 5/54, C 08 L 23/28, C 08 L 23/16

(21) Anmeldenummer: **85107167.0**

(22) Anmeldetag: **11.06.85**

(54) **Silyl-substituierte Cyclopentadiene, Verfahren zur Herstellung und sie enthaltende Kunststoff- und Kautschukmischungen.**

(30) Priorität: **28.07.84 DE 3427922**

(43) Veröffentlichungstag der Anmeldung: **05.02.86 Patentblatt 86/6**

(45) Bekanntmachung des Hinweises auf die Patenterteilung: **26.10.88 Patentblatt 88/43**

(84) Benannte Vertragsstaaten: **AT BE CH DE FR GB IT LI NL**

(56) Entgegenhaltungen: **US - A - 2 957 901**

(73) Patentinhaber: **Degussa Aktiengesellschaft, Weissfrauenstrasse 9, D-6000 Frankfurt am Main 1 (DE)**

(72) Erfinder: **Deschler, Ulrich, Dr., Birkenweg 1, D-6450 Hanau 9 (DE)**
Erfinder: **Panster, Peter, Dr., Im Lochseif 8, D-6458 Rodenbach (DE)**
Erfinder: **Kleinschmit, Peter, Dr., Wildaustrasse 19, D-6450 Hanau 9 (DE)**
Erfinder: **Wolff, Siegfried, Weiherstrasse 28, D-5303 Bornheim-Merten (DE)**
Erfinder: **Tan, Ewe-Hong, Rembrandstrasse 22, D-5047 Wesseling (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die Erfindung betrifft Silyl-substituierte Cyclopentadiene, deren Herstellung und sie enthaltende Kautschuk- und Kunststoffmischungen.

Cyclopentadienyltrialkoxisilane und Cyclopentadienylalkyltrialkylsilane sind bereits bekannt. Die Alkoxisilane werden vielfach zur Herstellung von Oberflächenbeschichtungen durch Hydrolyse verwendet. Gemäss der DE-PS 1 097 988 gewinnt man Cyclopentadienyltrialkoxisilane durch Umsetzen der entsprechenden Halogenverbindungen mit einem Alkohol.

Die Ausgangsverbindungen stellt man zuvor aus Trichlorsilan und Cyclopentadien mit einer Ausbeute von weniger als 50% her (US-PS 2 951 057).

Es ist auch bekannt, Cyclopentadienyltrialkoxisilane in einer direkten Reaktion aus Cyclopentadien und Trialkoxisilylchloriden zu erhalten (US-PS 2 957 901).

Nach zweimaliger Destillation gelangt man jedoch nur zu einem relativ reinem Produkt.

In der Zh. Obshch. Khim 1974, 44, (10) [C.A. 82:578069 (1975)] wird beschrieben, wie man in einem zweistufigen Prozess 3-(Triethylsilyl)propylcyclopentadien durch Hydrosilylierung von Allylcyclopentadien mit Ethyldichlorsilan und anschliessende Reaktion des Zwischenprodukts in einem Grignardprozess mit Ethylbromid herstellt.

Die nach diesem Verfahren gewonnene Verbindung lässt durch die Kette der Methylengruppen zwar eine grössere Unabhängigkeit der am Cyclopentadienring stattfindenden Reaktionen von dem Siliciumatom zu, gleichzeitig sind am Siliciumatom aber keine hydrolysierbaren Gruppen mehr vorhanden.

Gegenstand der Erfindung sind neue Silyl-substituierte Cyclopentadiene der Formel

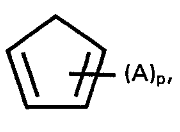 (I)

in der A entspricht

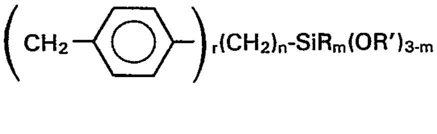

mit

R und R', gleich oder verschieden $C_1$- bis $C_6$-Alkyl, $C_5$ und $C_6$-Cycloalkyl, Benzyl, Phenyl, subst. Phenyl,

n: 1 bis 3
m: 0 oder 1,
p: 1 oder 2 mit der Massgabe, dass wenn p = 2 ist, A gleiche oder verschiedene Bedeutung besitzt und die Gesamtzahl der C-Atome der Alkoxi- bzw. Aryloxireste 36 bevorzugt 32 nicht übersteigt.
r: 0 oder 1

Verbindungen gemäss Formel I, bei denen p = 1 ist, werden durch Umsetzung einer Lösung von Cyclopentadienyl-alkali in einem aprotischen polaren organischen Lösungsmittel mit äquimolaren Menge eines Silans der Formel

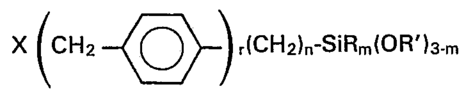 (II) (IIa)

in der bedeuten

R und R', gleich oder verschieden $C_1$ bis $C_6$-Alkyl, $C_5$ und $C_6$-Cycloalkyl, Benzyl, Phenyl, subst. Phenyl,

n: 1 bis 3
m: 0 oder 1,
r: 0 oder 1,
X: Cl, Br oder J

hergestellt.

Natriumverbindungen des Cyclopentadiens können nach dem Stand der Technik durch Umsetzung des Diens mit Natriumhydrid gewonnen werden.

Cyclopentadienylkalium erhält man aus Cyclopentadien und metallischem Kalium in Benzol oder Xylol.

Bevorzugt eingesetzt wird eine Lösung von Natriumcyclopentadien in Tetrahydrofuran (THF).

Als Lösungsmittel auch geeignet sind Ether wie Diethylether, Dibutylether, Diphenylether, Ethylenglykoldimethylether, Diethylenglykoldimethylether sowie Gemische der genannten Ether mit aliphatischen oder aromatischen Kohlenwasserstoffen.

Die erfindungsgemässe Reaktion führt man in Abwesenheit von Wasser und unter Schutzgas durch.

Während des Einmischens der Silane in die vorgelegte Lösung von Cyclopentadienylalkali, bevorzugt mit Natrium als Alkali in THF, wird die Temperatur so geregelt, dass 35°C nicht überschritten werden, da sonst zunehmend eine Mehrfachsubstitution des Cyclopentadienringes einsetzt.

Anschliessend rührt man die Reaktionslösung bei 20 bis 65°C bevorzugt bei Raumtemperatur, bis die Umsetzung vollständig ist.

In Abhämgigkeit von dem abzugspaltenden Halogenatom benötigt man bei Einsatz von Chloralkylsilanen gemäss Formel II für eine vollständige Reaktion bis 7 Tage, bevorzugt 4 Tage.

Entsprechende Jodverbindungen werden schneller umgesetzt.

Anschliessend trennt man den Niederschlag aus dem entstandenen Alkalihalogenid über ein Filter ab, befreit die Reaktionslösung durch Destillation von dem eingesetzten Lösungsmittel und fraktioniert schliesslich die gewünschten Produkte z.B. über eine Vigreux-Kolonne.

Ein weiterer Gegenstand der Erfindung ist ein Verfahren, bei dem man die wie oben beschrieben hergestellten Mono-silylsubstituierten Cyclopentadiene in ein vorgelegtes aprotisches polares organisches Lösungsmittel, vorzugsweise THF, bei einer Temperatur von 50 bis 55°C langsam eindosiert, das

mindestens die äquimolare Menge, vorzugsweise einen bis zu 1,2fachen Überschuss an NaH enthält, bezogen auf das substituierte Cyclopentadien.

Die Dosiergeschwindigkeit wird dabei über die $H_2$-Entwicklung reguliert.

Nach Beendigung der Zugabe rührt man noch 1,0 bis 4 h unter Rückfluss.

Eventuell überschüssiges NaH wird nach dem Abkühlen abgetrennt.

Die so vorbereitete Reaktionslösung versetzt man zur Herstellung von disubstituierten Cyclopentadienen bei 0 bis 150°C, bevorzugt bei Raumtemperatur, mit einem Halogenalkylsilan gemäss Formel II und rührt bis zur vollständigen Umsetzung.

Das ausgefallene Natriumhalogenid wird abfiltriert, das Filtrat nach dem Abziehen des Lösungsmittels fraktioniert destilliert.

Bei den gewünschten Produkten handelt es sich um isomere Bis-silylsubstituierte Cyclopentadiene. Bevorzugt eingesetzt werden als Silane gemäss Formel II

Chlormethyltrimethoxysilan, Chlormethyl-methyl diethoxysilan, 2-Chlorethyltriethoxysilan, 2-Chlorethyl-methyl-diethoxysilan, 3-Chlorpropyltriethoxysilan, 3-Chlorpropyl-methyl-diethoxysilan, (2-Triethoxysilylethyl)benzylchlorid, 2-Methyl-diethoxysilylethyl)benzylchlorid,

die analogen Brom- und Jodverbindungen, die ebenso wie die Chlorverbindungen auch als Methoxianaloge geeignet sind.

Die Erfindung betrifft ebenso Mischungen auf der Basis von zu Elastomeren vernetzbaren Kautschuken und Kunststoffen, silikatischen Füllstoffen und Organosiliciumverbindungen gemäss Formel I, die keinen elementaren Schwefel enthalten.

Derartige mit Peroxid vernetzbare Mischungen werden bisher unter Verwendung von Vinylsilanen wie z.B. Vinyl-tris-2-methoxiethoxysilan, vor allem in der Kabelindustrie, eingesetzt.

Aufgrund der bei der Verarbeitung auftretenden giftigen Begleitstoffe bzw. wegen der niedrigen Flammpunkte ist man auf der Suche nach einem gleichwertigen Haftvermittler auf Silanbasis, der die Aufgaben der Vinylsilane übernehmen kann.

Es wurde nun gefunden, dass die Cyclopentadienylderivate gemäss Formel I ohne Umstellung der eingeführten Rezepturen anstelle des Vinylsilans in die peroxidisch vernetzbaren Mischungen eingearbeitet werden können, und die anwendungstechnischen Eigenschaften der aus diesen neuen Mischungen hergestellten Endprodukte mindestens gleich gut, in vielen Fällen sogar besser sind als die der unter Verwendung des genannten Vinylsilans produzierten.

Gegenstand der Erfindung sind ebenfalls Mischungen auf der Basis von mit Peroxiden vernetzbaren Kautschuken und Kunststoffen, die Cyclopentadienylalkylderivate gemäss Formel I in Mengen von 0,2 bis 10 Gew.-%, bevorzugt bis 3,0 Gew.-%, und silikatische Füllstoffe in einer Menge von 10 bis 250 Gew.-%, bevorzugt 10 bis 150 Gew.-%, enthalten. Letztere bezogen auf 100 Teile Kautschuk beziehungsweise Kunststoff, erstere dagegen bezogen auf die Menge des silikatischen Füllstoffs.

Sie kann die üblichen fakultativen Mischungsbestandteile wie beispielsweise Alterungsschutzmittel, Wärmestabilisatoren, Lichtschutzmittel, Ozonstabilisatoren, Verarbeitungshilfsmittel, Weichmacher, Klebrigmacher, Treibmittel, Farbstoffe, Pigmente, Wachse, Streckmittel, Bleioxid, Zinkoxid und/oder Vernetzer-Aktivatoren wie Triallylisocyanurat, Triallylcyanurat beziehungsweise Methacrylaten enthalten.

Falls neben dem silikatischen Füllstoff auch Russ in den neuen Mischungen vorhanden sein soll, ist die Gesamtfüllstoffmenge zweckmäsigerweise auf etwa maximal 300 Gewichtsteile, bezogen auf 100 Gewichtsteile Kautschuk beziehungsweise Kunststoff zu begrenzen.

Ein Verfahren zum Vernetzen besteht darin, dass man die Mischung aus mindestens einem Kautschuk beziehungsweise Kunststoff mindestens einem silikatischen Füllstoff in Mengen von 1 bis 300 Gewichtsteilen, Russ in Mengen von 0 bis 300 Gewichtsteilen, mindestens einem an sich für die Vernetzung bekannten organischen Peroxid in Mengen von 0,01 bis 10 Gewichtsteilen und mindestens einem Organosilan der oben angegebenen allgemeinen Formel I in Mengen von 0,2 bis 10 Gewichtsteilen je 100 Gewichtsteile silikatischen Füllstoffs, wobei die übrigen genannten Gewichtsteile jeweils bezogen sind auf 100 Gewichtsteile des Kunststoffs beziehungsweise Kautschuks, sowie gegebenenfalls aus weiteren üblichen Mischungsbestandteilen verformt und auf Temperaturen von 100 bis 300°C während einer von der Erhitzungstemperatur abhängigen Zeitdauer zwischen 3 und 300 Minuten erhitzt.

Die erfindungsgemässe vernetzbare Mischung enthält zusätzlich vorteilhafterweise Zinkoxid in Mengen von 0,05 bis 10 Gewichtsteilen, wobei die Gewichtsteile wiederum jeweils bezogen sind auf 100 Gewichtsteile des Kautschuks beziehungsweise Kunststoffs.

Zu den erfindungsgemäss verwendbaren Kautschuk- beziehungsweise Kunststoffarten zählen alle enthaltenden zu Elastomeren vernetzbaren Kautschuke und Kunststoffe, vorzugsweise sogenannte Dien-Elastomere.

Dazu zählen beispielsweise ölgestreckte, natürliche und synthetische Kautschuke, insbesondere Naturkautschuke, Butadienkautschuke, Isoprenkautschuke, Butadien-Styrol-Kautschuke, Butadien-Acrylnitril-Kautschuke, halogenierte Butylkautschuke, halogenierte Butylkautschuke, Kautschuke aus 2-Chlor-Butadien, Terpolymere aus Äthylen, Propylen und zum Beispiel nichtkonjugierten Dienen, Carboxylkautschuke, Epoxidkautschuke, Trans-Polypentenamer, Äthylen-Vinylacetat-Copolymere, Äthylen-Propylen-Copolymere sowie Mischungen aus den genannten Sorten. Besonders geeignet sind Polyäthylen, chloriertes Polyäthylen EPDM, Fluorkautschuke und Mischmonomere, die Äthylen enthalten.

Gegebenenfalls kommen auch chemische Derivate des Naturkautschuks sowie modifizierte Naturkautschuke für die Verwendung im Sinne der Erfindung in Frage. Die nach der Erfindung verwendbaren silikatischen Füllstoffe, auch als Mischung von zwei oder mehr Füllstoffen, sind an sich in der Kautschuktechnologie bekannte Füllstoffe. Dabei ist der Begriff

«silikatischer Füllstoff» ein weitgefasster und bezieht sich auf mit Kautschuken verträgliche beziehungsweise in derartige Mischungen einarbeitbare Füllstoffe, die aus Silikaten bestehen, Silikate enthalten und beziehungsweise oder Silikate im weitesten Sinne chemisch gebunden enthalten. Insbesondere zählen zu den silikatischen Füllstoffen: Hochdisperse Kieselsäuren (Siliziumdioxid) mit spezifischen Oberflächen im Bereich von etwa 5 bis 1000, vorzugsweise 20 bis 400 $m^2/g$ (mit gasförmigem Stickstoff bestimmt nach der bekannten Methode gemäss BET) und mit Primärteilchengrössen im Bereich von etwa 10 bis 400 nm, die hergestellt werden können z.B. durch Ausfällung aus Lösungen von Silikaten, durch hydrolytische und beziehungsweise oder oxidative Hochtemperaturumsetzung, auch Flammenhydrolyse genannt, von flüchtigen Siliziumhalogeniden oder durch ein Lichtbogenverfahren. Diese Kieselsäuren können gegebenenfalls auch als Mischoxide oder Oxidgemische mit den Oxiden der Metalle Aluminium, Magnesium, Calcium, Barium, Zink, Zirkon und/oder Titan vorliegen.

Synthetische Silikate, z.B. Aluminiumsilikat oder Erdalkalisilikate wie Magnesium- oder Calciumsilikat, mit spezifischen Oberflächen von etwa 20 bis 400 $m^2/g$ und Primärteilchengrössen von etwa 10 bis 400 nm.

Natürliche Silikate, z.B. Kaoline und Clay sowie natürliche Kieselsäuren wie beispielsweise Quarz und Kieselgur.

Glasfasern und Glasfasererzeugnisse wie Matten, Stränge, Gewebe, Gelege und dergleichen sowie Mikroglaskugeln.

Die genannten Silikatfüllstoffe werden vorzugsweise in Mengen von etwa 10 oder gegebenenfalls noch darunter bis zu etwa 250 Gewichtsteilen, bezogen auf 100 Gewichtsteile des Polymeren, eingesetzt. Als Füllstoff-Mischungen können genannt werden Kieselsäure/Kaolin oder Kieselsäure/Glasfasern/Asbest sowie Verschnitte der silikathaltigen Verstärkerfüllstoffe mit den bekannten Gummirussen, z.B. Kieselsäure/ISAF-Russ oder Kieselsäure/Glasfaserkord/HAF-Russ.

Erfindungsgemäss werden als silikatische Füllstoffe den genannten hochdispersen oder aktiven Kieselsäuren vorgezogen, insbesondere die gefällten Kieselsäuren, in Mengen von 10 bis 150 Gewichtsteilen, bezogen auf 100 Gewichtsteile Kautschuk bzw. Kunststoff. Russ kann zusätzlich in den erfindungsgemässen Mischungen zugegen sein, nicht nur zur Grau- oder Schwarzfärbung der Vulkanisate, sondern zur Erzielung von besonderen, wertvollen Vulkanisateigenschaften, wobei die bekannten Gummirusse vorgezogen werden. Diese wertvollen Eigenschaften waren keinesfalls vorauszusehen gewesen. Vorzugsweise wird Russ in Mengen von 0 bis 150 Gewichtsteilen, bezogen auf 100 Gewichtsteile Kautschuk, in den neuen Mischungen eingesetzt.

Für den Fall des Vorhandenseins von silikatischem Füllstoff und Russ in den Kautschuk-Mischungen wird der Gesamtfüllstoffgehalt, bezogen auf 100 Gewichtsteile Kautschuk, auf maximal 300 Gewichtsteile, vorzugsweise auf 150 Gewichtsteile, begrenzt.

Beispiele radikalischer Polymerisationsauslöser sind a) organische Peroxide wie Lauroylperoxid, Dipropionylperoxid, Benzoylperoxid, 10 Di-t-butylperoxid, t-Butylhydroxyperoxid und t-Butylperoxyisobutyrat, 2,3-Bis(tert.-butylperoxid-isopropyl)-benzol und b) Azoverbindungen wie Azobisisobutyronitril und Azoisobutylvaleronitril. Ausserdem Butyl-4,4-bis-(tert. butyl peroxy) valerate, p-Chlorobenzoyl-Peroxide, Cumene hydroperoxide, Tert. Butyl cumyl Peroxide, Dicumylperoxide, 1,1-Di-tert. butyl-peroxy-3,3,5-trimethylcyclohexane (siehe Rubber Chemicals von J. Van Alphen, Seite 133 bis 139).

Zur Anwendung können die beschriebenen Organosilane, die Beschleuniger sowie gewünschtenfalls auch andere Zusätze den Mischungen oder einigen anderen Bestandteilen bzw. einem Bestandteil dieser Mischungen, zum Beispiel dem Füllstoff, vorher zugesetzt werden. Es ist nicht von Vorteil, die Organosilane vor dem Einsatz zu hydrolysieren. Die beschriebenen Organosiliziumverbindungen können aber zweckmässigerweise, insbesondere aus Gründen der leichteren Dosierbarkeit und Handhabung, einem Teil des zu verwendenden silikatischen Füllstoffes zugemischt werden, wodurch die üblicherweise flüssigen Organosilane in ein pulveriges Verarbeitungsprodukt übergeführt werden. Es ist gegebenanfalls auch möglich, jedoch nicht mit speziellen Vorteilen verbunden, die Organosilane aus ihrer Lösung auf die Oberfläche der Füllstoffteilchen gleichmässig aufzubringen und in dieser Form zur Verwendung zu führen. Die drei oder auch nur zwei der geschilderten Verwendungsweisen können auch kombiniert werden.

Das Verfahren zum Herstellen und Verformen der Mischungen ist dadurch gekennzeichnet, dass man zunächst in einem schnell laufenden Innenmischer in einer Zeit von 2 bis 30 Minuten bei einer Tourenzahl von 20 bis 120 pro Minute und einer anfänglichen Temperatur von 30 bis 110°C den Kautschuk bzw. Kunststoff mit dem silikatischen Füllstoff (in einer oder mehreren gleichen Portionen nacheinander) mischt, zu diesem Gemisch das Verarbeitungs- oder Weichmacheröl und das Organosilan gemäss Formel I gibt, anschliessend den Alterungs- und UV-Schutz hinzufügt. Die entstehende Masse wird auf Mischwalzen bei einer Mischungstemperatur von 40 bis 100°C gemischt, wobei innerhalb einer Zeit von 1 bis 10 Minuten der peroxidische Vernetzer gleichmässig eingearbeitet und anschliessend von der Mischwalzenvorrichtung entnommen wird.

Dann wird das Gemisch bei Temperaturen zwischen 100 bis 300°C mit Hilfe üblicher Vorrichtungen zu Formkörpern verarbeitet.

Industrielle Einsatzgebiete für die beschriebenen Mischungen sind die Herstellung von Kabelmänteln, Schläuchen, Walzenbelägen, Dichtungsringen, Dämpfungselementen usw.

Es werden im folgenden einige beispielhafte Rezepturen für die neuen Mischungen mit Prüfergebnissen wiedergeben:

| | Gemessen in | Norm |
|---|---|---|
| Mooney-Plastizität (-Viskosität) bei 100°C, Normalrotor, Prüfdauer: 4 Minuten | | DIn 53 524 |
| Zerreissfestigkeit | (MPa) | DIN 53 504 |
| Spannungswert bei 300% Dehnung (Moduli) | (MPa) | DIN 53 504 |
| Abrieb (auch «DIN-Abrieb») | $mm^3$ | DIN 53 516 |
| Compression Set B 70h/100°C | % | ASTM D 395 |

*Beispiele*

*Herstellung der Verbindungen*

Um den Aufwand gering zu halten, wird eine sehr einfache Schutzgastechnik (Durchspülen und Füllen der Glasapparaturen mit Argon) eingesetzt, wodurch die Reaktionsausbeute etwas beeinträchtigt wird.

— Dicyclopentadien wird direkt vor der Umsetzung durch Destillation in das Monomere (Kp. = 42°C) umgewandelt.
— NaH (Rest: Paraffinöl) wird eingesetzt.
— NaCp wird wie beschrieben aus Cyclopentadien (CpH) und NaH in THF dargestellt.

*Allgemeine Vorschrift zur Darstellung der Silane* $\underline{\underline{1}}$ - $\underline{\underline{7}}$

Die rot bis violett gefärbte Lösung von NaCP in THF wird vom überschüssigen NaH dekantiert und innerhalb von 30 min mit der äquimolaren Menge an z.B. (Trialkoxysilyl)alkylchlorid bzw. -aralkylchlorid versetzt. Die Temperatur sollte dabei 35°C nicht übersteigen, da sonst zunehmend Mehrfachalkylierung einsetzt. Die Reaktionslösung wird für 4 d bei Raumtemperatur gerührt, der gebildete Niederschlag aus NaCl abgetrennt. Die Reaktionslösung wird destillativ vom THF befreit und schliesslich im Vakuum über eine Vigreux-Kolonne fraktioniert.

*Beispiel 1*

— *(Trimethoxysilyl)methylcyclopentadien,* $\underline{\underline{1}}$:

Darstellung aus 120 ml (1,44 Mol) CpH, 55 g (1,8 Mol, Überschuss) NaH und 220 g (1,3 Mol) $ClCH_2Si(OCH_3)_3$ in 500 ml THF.

Niederschlag: 68,8 g (91% d.Th.)
Fraktionierung: 30 g $ClCH_2Si(OCH_3)_3$ ($Kp_5$ = 50-60°C) 195,7 g $\underline{\underline{1}}$
Ausbeute: 75%
Farblose Flüssigkeit, $Kp_{0,5}$ = 51°C;

$C_9H_{16}O_3Si$ (200,311)

| | C | H | Si |
|---|---|---|---|
| Ber.: | 53,97 | 8,05 | 14,02 |
| Gef.: | 53,33 | 8,34 | 14,00 |

*Beispiel 2*

— *(Trimethoxysilyl)propylcyclopentadien,* $\underline{\underline{2}}$:

Darstellung aus 90 ml (1,1 Mol) CpH, 40 g (1,3 Mol, Überschuss) NaH und 198,6 g (1 Mol) 3-Cl-$C_3$-$H_6$-$Si(OCH_3)_3$ in 500 ml THF. In Abweichung zur gegebenen Vorschrift wurde die Reaktionslösung nach der Zugabe des Cl-$C_3C_6$-$Si(OCH_3)_3$ für 2h refluxiert, wodurch in beträchtlichem Umfange Mehrfachalkylierung hervorgerufen wurde.

Niederschlag: 50 g (86% d.Th.)
Fraktionierung: 62 g Cl-$C_3H_6$-$Si(OCH_3)_3$ ($Kp_{0,5}$ = 55°C) 114,5 g $\underline{\underline{2}}$
Ausbeute: 50%
Farblose Flüssigkeit, $Kp_{0,5}$ = 85°C;

$C_{11}H_{20}O_3Si$ (228,365):

| | C | H | Si |
|---|---|---|---|
| Ber.: | 57,89 | 8,77 | 12,31 |
| Gef.: | 57,51 | 8,96 | 12,51 |

*Beispiel 3*

— *(Triethoxysilyl)methylcyclopentadien,* $\underline{\underline{3}}$:

Darstellung aus 124 ml (1,5 Mol) CpH, 55 g (1,8 Mol, Überschuss) NaH und 319 g (1,5 Mol) Cl-$CH_2$-Si-$(OCH_2H_5)_3$ in 500 ml THF.

Niederschlag: 58,5 g (67% d.Th.)
Fraktionierung: 105,4 g Cl-$CH_2$-$Si(OC_2H_5)_3$ ($Kp_3$ = 65°C) 202,2 g $\underline{\underline{3}}$
Ausbeute: 56%
Farblose Flüssigkeit, $Kp_{10}$-2 = 52°C

$C_{12}H_{22}O_3Si$ (242,392)

| | C | H | Si |
|---|---|---|---|
| Ber.: | 59,46 | 9,15 | 11,59 |
| Gef.: | 59,18 | 9,45 | 11.09 |

*Beispiel 4*

— *(Triethoxysilyl)propylcyclopentadien,* $\underline{\underline{4}}$:

Darstellung aus 100 ml (1,2 Mol) CpH, 39 g (1,3 Mol, Überschuss) NaH und 290 g (1,2 Mol) 3-Cl-$C_3H_6$-$Si(OC_2H_5)_3$ in 500 ml THF.
Niederschlag: 55,8 g (80% d.Th.)
Fraktionierung: 51,5 g Cl-$C_3H_6$-$Si(OC_2H_5)_3$ ($Kp_{0,05}$ = 67°C) 188,3 g $\underline{\underline{4}}$
Ausbeute: 58%
Farblose Flüssigkeit, $Kp_{0,05}$ = 88°C.

$C_{14}H_{26}O_3Si$ (270,446)

| | C | H | Si |
|---|---|---|---|
| Ber.: | 62,18 | 9,69 | 10,38 |
| Gef.: | 62,10 | 9,71 | 10,60 |

*Beispiel 5*

— *(Tri-n-butoxysilyl)propylcyclopentadien,* 5:

Darstellung aus 41,7 ml (0,5 Mol) CpH, 13,2 g (0,55 Mol, Überschuss) NaH und 162,5 g (0,5 Mol) 3-Cl-$C_3H_6$-Si($OC_4H_9$)$_3$ un 250 ml THF.

Niederschlag: 28,4 g (97% d.Th.)
Fraktionierung: 6,2 g Cl-$C_3H_6$-Si($OC_4H_9$)$_3$ ($Kp_{0,04}$ = 99°C) 83,3 g 5
Ausbeute: 47%
Farblose Flüssigkeit, $Kp_{0,04}$ = 140°C

$C_{20}H_{38}O_3Si$ (354,609)

| | C | H |
|---|---|---|
| Ber.: | 67,74 | 10,80 |
| Gef.: | 68,30 | 11,42 |

*Beispiel 6*

— *(Diethoxymethylsilyl)-propylcyclopentadien,* 6:

Darstellung aus 41,7 ml (0,5 Mol) CpH, 13,2 g (0,55 Mol), Überschuss) NaH und 105,4 g (0,5 Mol) 3-Cl-$C_3H_6$-Si($CH_3$)-($OC_2H_5$)$_2$ in 250 ml TMF.

Niederschlag: 25,2 g (90% d.Th.)
Fraktionierung: 8,4 g Cl-$C_3H_6$-Si($CH_3$)($OC_2H_5$)$_2$ ($Kp_{0,1}$ = 40°C) 75,7 g 6
Ausbeute: 63%
Farblose Flüssigkeit, $Kp_{0,05}$ = 68°C

$C_{13}H_{24}O_2Si$ (240,420)

| | C | H |
|---|---|---|
| Ber.: | 64,95 | 10,06 |
| Gef.: | 65,14 | 11,11 |

*Beispiel 7*

— *(Trimethoxysilyl)ethylbenzylcyclopentadien,* 7:

Darstellung aus 25 ml (0,3 Mol) CpH, 7,9 g (0,33 Mol, Überschuss) NaH und 82,5 g (0,3 Mol) Cl-$CH_2$-$C_6H_4$-$C_2H_4$-Si($OCH_3$)$_3$ in 150 ml TMF.

Niederschlag: 16,7 g (95% d.Th.)
Fraktionierung: 3,5 g Cl-$CH_2$-$C_6H_4$-$C_2H_4$-Si-($OCH_3$)$_3$ ($Kp_{0,05}$ = 105°C) 33,1 g 7
Ausbeute: 36,0%
Farblose Flüssigkeit, $Kp_{0,01}$ = 125°C;

C H $O_3$Si (304,464)

| | C | H |
|---|---|---|
| Ber.: | 67,06 | 7,95 |
| Gef.: | 68,08 | 8,74 |

Allgemeine Vorschrift zur Darstellung der Silane 8 - 12

Ein 1,2facher Überschuss an NaH wird in THF vorgelegt. Dazu wird bei 50-55°C z.B. die äquimolare Menge (Trialkoxysilyl)alkylcyclopentadien 1 - 4 zugetropft, wobei die Zutropfgeschwindigkeit über die $H_2$-Entwicklung reguliert wird.

Nach Beendigung der Silanzugabe wird noch für 1 h unter Rückfluss gerührt. Nach dem Abkühlen wird vom überschüssigen NaH dekantiert. Schliesslich wird die Reaktionslösung bei Raumtemperatur tropfenweise mit dem entsprechenden Halogenalkyltrialkoxysilan versetzt und gerührt. Die Reaktionszeit beträgt für Chloralkylsilane ca. 4 Tage, für Jodalkylsilane jedoch höchstens 1 d. Vom ausgefallenen Na-halogenid wird abfiltriert, das Filtrat wird nach dem Abziehen des Lösungsmittels fraktioniert destilliert.

*Beispiel 8*

— *Bis[(trimethoxysilyl)methyl]cyclopentadien,* 8:

Darstellung aus 8 g (0,26 Mol, Überschuss) NaH, 45 g (0,22 Mol) 1 und 58 g (0,22 Mol) J-$CH_2$-Si-($OCH_3$)$_3$ in 60 ml THF.

Niederschlag: 23,5 g (71% d.Th.)
Fraktionierung: 21,3 g J-$CH_2$-Si($OCH_3$)$_3$ + 1 ($Kp_4$ = 35-70°C) 42,8 g 8
Ausbeute: 58%
Farblose Flüssigkeit, $Kp_{10^{-3}}$ = 95°C

$C_{13}H_{26}O_6Si_2$ (334,518)

| | C | H |
|---|---|---|
| Ber.: | 46,68 | 7,83 |
| Gef.: | 45,64 | 7,82 |

*Beispiel 9*

— *Bis[(trimethoxysilyl)propyl]cyclopentadien,* 9:

Darstellung aus 12,3 g (0,4 Mol, Überschuss) NaH, 79,9 g (0,35 Mol) 2 und 69,3 g (0,35 Mol) 3-Cl-$C_3H_6$-Si($OCH_3$)$_3$ in 300 ml THF.

Niederschlag: 16 g (78% d.TH.)
Fraktionierung: 12,1 g Cl-$C_3H_6$-Si($OCH_3$)$_3$ ($Kp_{0,5}$ = 45°C) 3,6 g 2 ($Kp_{0,5}$ = 85°C) 87,4 g 9
Ausbeute: 64%
Farblose Flüssigkeit, $Kp_{0,01}$ = 145°C

$C_{17}H_{34}{=}_6Si_2$ (390,127):

| | C | H | Si |
|---|---|---|---|
| Ber.: | 52,27 | 8,77 | 14,38 |
| Gef.: | 52,28 | 9,26 | 13,40 |

*Beispiel 10*

— *Bis[(triethoxysilyl)methyl]cyclopentadien,* 10:

Darstellung nach Variante A aus 25 g (0,8 Mol, Überschuss) NaH, 153 g (0,63 Mol) 3 und 108,3 g (0,5 Mol) Cl-$CH_2$-Si($OC_2H_5$)$_3$ in 200 ml THF.

Niederschlag: 25,5 g (87% d.Th.)
Fraktionierung: 13,6 g Cl-$CH_2$-Si($OC_2H_5$)$_3$ ($Kp_1$ = 43°C) 23,6 g 3 ($Kp_1$ = 50-90°C) 121,8 g 10
Ausbeute: 58%
Farblose Flüssigkeit, $Kp_{10}$-3 = 120°C

$C_{19}H_{38}O_6Si_2$ (18,681)

| | C | H |
|---|---|---|
| Ber.: | 54,51 | 9,15 |
| Gef.: | 55,00 | 9,25 |

*Beispiel 11*

*— Bis[(triethoxysilyl)propyl]cyclopentadien,* 11:

Darstellung aus 12,3 g (0,4 Mol), Überschuss) NaH, 94 g (0,35 Mol) 4 und 84,2 g (0,35 Mol) 3-Cl-$C_3H_6$-Si($OC_2H_5$)$_3$ in 300 ml THF.

Niederschlag: 17,3 g (85% d.Th.)
Fraktionierung: 10,4 g Cl-$C_3H_6$-Si($OC_2H_5$)$_3$ ($Kp_{0,1}$ = 60°C) 5,4 g 4 ($Kp_{0,1}$ = 98°C) 108,7 g 11
Ausbeute: 65%
Farblose Flüssigkeit, $Kp_{10^{-3}}$ = 162°C

$C_{23}H_{46}O_6Si_2$ (474,789)

| | C | H | Si |
|---|---|---|---|
| Ber.: | 58,19 | 9,77 | 22,83 |
| Gef.: | 58,09 | 9,86 | 12,09 |

*Beispiel 12*

*— Trimethoxysilyl)methyl(triethoxysilyl)propylcyclopentadien,* 12:

Darstellung aus 13,2 g (0,55 Mol, Überschuss) NaH, 85,3 g (0,5 Mol) Cl-$CH_2$-Si($OCH_3$)$_3$ und 135,1 g (0,5 Mol) 4 in 250 ml THF.

Niederschlag: 21,1 g (72% d. Th.)
Fraktionierung: 17 g Cl-$CH_2$-Si($OCH_3$)$_3$ ($Kp_1$ = 42°C) 21,6 g 4 ($Kp_1$ = 110°C) 67 g 12
Ausbeute: 33%
Farblose Flüssigkeit, $Kp_{0,1}$ = 185°C

*Anwendungsbeispiele*

*Beispiel 13*

Die Wirkung des erfindungsgemässen Silans gemäss Formel (I), Cyclopentadienylpropyltriethoxisilan, wird in einer Standardrezeptur aus Basis chloriertem Polyäthylen untersucht.

| | 1 | 2 |
|---|---|---|
| | (Mengen in Gewichtsteilen) | |
| Chloriertes Polyäthylen | 100 | 100 |
| Magnesiumoxid | 4 | 4 |
| Feinteilige, hochaktive gefüllte Kieselsäure | 40 | 40 |
| Dioctylphthalate | 12,5 | 12,5 |
| Phosphorsäurediphenylkresylester | 12,5 | 12,5 |
| 1,3-Bis-(tert. butyl-peroxy-isopropyl) benzol (40% wirksam) | 6 | 6 |
| Cyclopentadienylpropyltriäthoxisilan (4) | — | 1 |
| Vulkanisationstemperatur: 170°C | | |
| Mooney-Viskosität, ML (1+4) 100°C | 138 | 115 |
| Zerreissfestigkeit (MPa) | 17,1 | 21,4 |
| Spannungswert 300% (MPa) | 3,4 | 5,9 |
| DIN-Abrieb ($mm^3$) | 203 | 149 |
| Compression Set B 70h/100°C (%) | 54,9 | 34,1 |

Aus der Tabelle geht hervor, dass die mit dem erfindungsgemässen Silan erhaltenen Vulkanisate gegenüber der Mischung ohne Silan hervorragende Spannungsdehnungseigenschaften und Compression Set-Werte aufweist. Dabei wird die Viskosität gesenkt, was die Verarbeitung positiv beeinflusst.

*Beispiel 14*

In einer weiteren Versuchsreihe wird die Wirkung von Cyclopentadienylpropyltriäthoxisilan in Clay-gefüllten EPDM-Mischungen untersucht.

| | 1 | 2 |
|---|---|---|
| EPDM | 100 | 100 |
| Zinkoxid | 5 | 5 |
| Clay | 100 | 100 |
| Verarbeitungsöl | 25 | 25 |
| Poly-2,2,4-trimethyl-1,2-dihydroxychinolin | 1 | 1 |
| 2-Mercaptobenzimidazol | 1 | 1 |
| 1,3-Bis(tert. butyl-peroxy-Isopropyl)-benzol (40% wirksam | 7,5 | 7,5 |
| Cyclopentadienylpropyltriäthoxysilan | — | 1 |
| Vulkanisationstemperatur: 170°C | | |
| Zerreissfestigkeit (MPa) | 5,6 | 71 |
| Spannungswert 100% (MPa) | 3,0 | 5,5 |
| DIN-Abrieb ($mm^3$) | 221 | 144 |
| Compression Set B 70h/100°C (%) | 23,1 | 9,4 |

Zerreissfestigkeit, Spannungswert und Abrieb werden durch Zusatz von erfindungsgemässem Silan erheblich verbessert. Insbesondere der Compression Set, der für Dichtungsringe von grosser Wichtigkeit ist, wird durch den Zusatz von Cyclopentadienylpropyltriäthoxysilan gesenkt.

*Beispiel 15*

In einer weiteren Untersuchung wird die Wirkung von 3 weiteren Silanen gemäss Formel (I) in einer Standardrezeptur auf Basis EPDM untersucht. Der angewendete Füllstoff ist eine feinteilige, aktive gefällte Kieselsäure (BET = 40 $m^2$/g).

| | 1 | 2 | 3 | 4 |
|---|---|---|---|---|
| EPDM | 100 | 100 | 100 | 100 |
| Zinkoxid | 5 | 5 | 5 | 5 |
| Gefällte Kieselsäure | 100 | 100 | 100 | 100 |
| Verarbeitungsöl | 25 | 25 | 25 | 25 |
| Poly-2-2-4-trimethyl-1,2-dihydroxychinolin | 1 | 1 | 1 | 1 |
| 2-Merkaptobenzimidazol | 1 | 1 | 1 | 1 |
| Cyclopentadienylpropyltriäthoxysilan | — | 0,42 | — | — |
| Bis-(trimethoxysilylmethyl)-cyclopentadien | — | — | 0,62 | — |
| Bis-(trimethoxysilylpropyl)-cyclopentadien | — | — | — | 0,72 |
| 1,3-Bis(tert. butylperoxy-isopropyl)-benzol (40%) | 7,5 | 7,5 | 7,5 | 7,5 |
| Vulkanisationstemperatur: 170°C | | | | |
| Zerreissfestigkeit (MPa) | 3,2 | 6,9 | 5,2 | 6,4 |
| Spannungswert 100% (MPa) | 2,8 | 4,8 | 4,1 | 5,2 |
| DIN-Abrieb ($mm^3$) | 413 | 276 | 294 | 196 |
| Compression Set B 70h/100°C (%) | 14,3 | 7,1 | 7,1 | 5,7 |

Durch Zusatz von äquimolaren Mengen der erfindungsgemässen Silane werden die Vulkanisateigenschaften, insbesondere Zerreissfestigkeit, Spannungswert, Abrieb und Compression Set stark verbessert.

**Patentansprüche**

1. Silyl-substituierte Cyclopentadiene der Formel

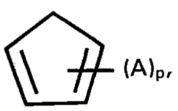

(I)

in der A entspricht

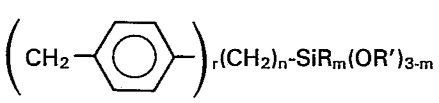

mit

R und R', gleich oder verschieden $C_1$- bis $C_6$-Alkyl, $C_5$- und $C_6$-Cycloalkyl, Benzyl, Phenyl, subst. Phenyl,

n: 1 bis 3
m: 0 oder 1,
p: 1 oder 2 mit der Massgabe, dass, wenn p = 2 ist, A gleiche oder verschiedene Bedeutung besitzt und die Gesamtzahl der C-Atome der Alkoxi- beziehungsweise Aryloxireste 36 nicht übersteigt.
r: 0 oder 1

2. Verfahren zur Herstellung von Mono-silylsubstituierten Cyclopentadienen gemäss Anspruch 1, dadurch gekennzeichnet, dass man unter Schutzgas eine Lösung von Cyclopentadienylalkali in einem aprotischen, polaren organischen Lösungsmittel mit einer äquimolaren Menge eines Silans der Formel

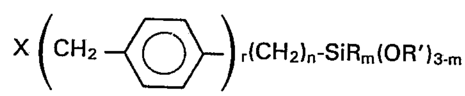

(II)

in der bedeuten

X: Chlor, Brom oder Jod
R und R', gleich oder verschieden $C_1$- bis $C_6$-Alkyl, $C_5$-und $C_6$-Cycloalkyl, Benzyl, Phenyl, subst. Phenyl,
n: 1 bis 3
m: 0 oder 1,
r: 0 oder 1

bei einer Temperatur von 0 bis 150°C versetzt, die Reaktionslösung bis zum Ablauf der Reaktion bei 20 bis 65°C, bevorzugt bei Raumtemperatur, rührt, anschliessend das entstandene Alkalihalogenid abfiltriert und das gewünschte Produkt destillativ abtrennt.

3. Verfahren nach Anspruch 2, dadurch gekennzeichnet, dass man Cyclopentadienylnatrium und Tetrahydrofuran verwendet.

4. Verfahren zur Herstellung von Bis-silylsubstituierten Cyclopentadienen gemäss Anspruch 1, dadurch gekennzeichnet, dass man unter Schutzgas eine Suspension von NaH in einem aprotischen polaren organischen Lösungsmittel vorlegt und bei 50 bis 55°C die äquimolare Menge des mono-silyl-substituierten Cyclopentadiens zutropft, anschliessend 1,0 bis 4 h unter Rückfluss rührt, gegebenenfalls nach dem Abkühlen überschüssiges NaH abtrennt, der Reaktionslösung bei 0 bis 150°C, bevorzugt bei Raumtemperatur, Halogen-alkylsilane gemäss Formel (II) tropfenweise zusetzt, nach Ablauf der Reaktion das ausgefallene Natriumhalogenid abtrennt und das gewünschte Produkt destillativ abtrennt.

5. Verfahren gemäss Anspruch 4, dadurch gekennzeichnet, dass man als organisches Lösungsmittel THF einsetzt.

6. Mischungen auf der Basis von mit Peroxiden

vernetzbaren, mit silikatischen Füllstoffen verstärkten Kautschuken und Kunststoffen, die 0,2 bis 10 Teile Silyl-substituierte Cyclopentadiene gemäss Anspruch 1 enthalten, bezogen auf den silikatischen Füllstoff.

7. Verfahren zum Herstellen und Verformen der Mischungen gemäss Anspruch 6, dadurch gekennzeichnet, dass man zunächst in einem schnell laufenden Innenmischer in einer Zeit von 2 bis 30 Minuten bei einer Tourenzahl von 20 bis 120 pro Minute und einer anfänglichen Innenmischertemperatur von 30 bis 110°C den Kautschuk beziehungsweise Kunststoff mit dem silikatischen Füllstoff (in einer oder mehreren gleichen Portionen nacheinander) mischt, diesem Gemisch das Verarbeitungs- oder Weichmacheröl und ein Silyl-substituiertes Cyclopentadien gemäss Formel (I) zugibt und anschliessend den Alterungs- und UV-Schutz hinzufügt und die entstehende Masse auf Mischwalzen bei einer Mischungstemperatur von 40 bis 100°C mischt, wobei innerhalb einer Zeit von 1 bis 10 Minuten der peroxidische Vernetzer gleichmässig eingearbeitet wird und anschliessend nach der Entnahme aus der Mischwalzenvorrichtung das Gemisch bei Temperaturen von 100 bis 300°C zu Formkörpern verarbeitet wird.

## Claims

1. Silyl-substituted cyclopentadienes of the formula

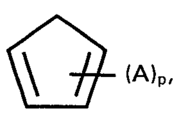

(I)

in which A corresponds to

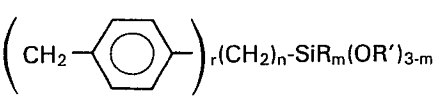

wherein

R and R', which are identical or different, are $C_1$-$C_6$-alkyl, $C_5$- and $C_6$-cycloalkyl, benzyl, phenyl or substituted phenyl,
n is 1 to 3,
m is 0 or 1,
p is 1 or 2, with the proviso that if p is 2, A has identical or different meanings and the total number of the C atoms of the alkoxy or aryloxy radicals does not exceed 36, and
r is 0 or 1.

2. Process for the preparation of mono-silyl-substituted cyclopentadienes according to Claim 1, characterized in that to a solution of alkali metal-cyclopentadienyl in an aprotic, polar organic solvent there is added, under a protective gas, an equimolar amount of a silane of the formula

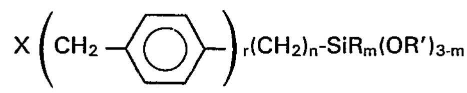

(II)

in which

X denotes chlorine, bromine or iodine,
R and R', which are identical or different, denote $C_1$-$C_6$-alkyl, $C_5$- and $C_6$-cycloalkyl, benzyl, phenyl or substituted phenyl,
n denotes 1 to 3,
m denotes 0 or 1, and
r denotes 0 or 1,

at a temperature of 0 to 150°C, the reaction solution is stirred at 20 to 65°C, preferably at room temperature, until the reaction has ceased, the resulting alkali metal halide is then filtered off and the desired product is isolated by distillation.

3. Process according to Claim 2, characterized in that sodium-cyclopentadienyl and tetrahydrofuran are used.

4. Process for the preparation of bis-silyl-substituted cyclopentadienes according to Claim 1, characterized in that a suspension of NaH in an aprotic polar organic solvent is taken as the initial charge, under a protective gas, an equimolar amount of the mono-silylsubstituted cyclopentadiene is added dropwise at 50 to 55°C, thereafter the mixture is stirred under reflux for from 1.0 to 4 hours, excess NaH is removed, where appropriate, after the mixture has cooled, a halogenoalkylsilane according to formula (II) is added dropwise to the reaction solution at 0 to 150°C, preferably at room temperature, after the reaction has ceased the sodium halide which has precipitated is separated off, and the desired product is isolated by distillation.

5. Process according to Claim 4, characterized in that THF is employed as the organic solvent.

6. Mixture based on peroxide-crosslinkable rubbers and plastics which are reinforced with silicate fillers and which contain 0.2 to 10 parts, relative to the silicate filler, of silyl-substituted cyclopentadienes according to Claim 1.

7. Process for the preparation and moulding of the mixture according to Claim 6, characterized in that first the rubber or plastic is mixed with the silicate filler (added in a single portion or in several successive identical portions) in a high-speed internal mixer over a period of 2 to 30 minutes at a speed of revolution of 20 to 120 per minute and an initial internal mixer temperature of from 30 to 110°C, the processing oil or plasticizer oil and a silyl-substituted cyclopentadiene according to formula (I) are added to this mixture and thereafter the anti-ageing agent and UV-protective agent are added and the resulting mass is mixed on a mixing mill at a temperature of the mixture of 40 to 100°C, the peroxide crosslinking agent being uniformly incorporated over a period of 1 to 10 minutes, and subsequently the mixture, after having been removed from the mixing mill, is converted to mouldings at temperatures of 100 to 300°C.

## Revendications

1. Cyclopentadiènes substitués par un silyl de formule

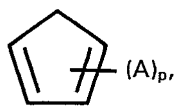

(I)

dans laquelle A correspond à

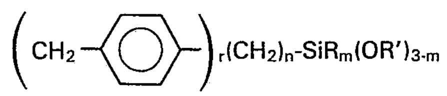

avec R et R' identiques ou différents, sont un alcoyle en $C_1$ à $C_6$, un cycloalcoyle en $C_5$ ou $C_6$, benzyle, phényl ou un phényl substitué,

n est de 1 à 3
m est 0 ou 1
p est 1 ou 2
avec la mesure que lorsque p est égal à 2, A possède une signification identique ou différente et que le nombre total d'atomes de carbone des restes alcoxy ou aryloxy ne dépasse pas 36
r est 0 ou 1.

2. Procédé de préparation des cyclopentadiènes mono-substitués par un silyl selon la revendication 1, caractérisé en ce que l'on additionne sous gaz protecteur une solution d'un cyclopentadiène-alcalin dans un solvant organique polaire aprotique avec une quantité équimoléculaire d'un silane de formule

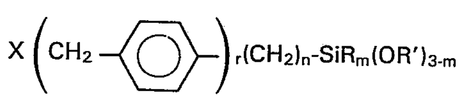

(II)

dans laquelle

X représente du Chlore, du Brome ou de l'Iode
R et R', identiques ou différents, représentent un alcoyle en $C_1$ à $C_6$, un cycloalcoyle en $C_5$ ou $C_6$, benzyle, phényl ou phényl substitué
n représente 1 à 3
m représente 0 ou 1
r représente 0 ou 1

à une température de 0 à 150°C, l'on agite la solution réactionnelle jusqu'à achèvement de la réaction à 20 à 65°C, de préférence à température ordinaire, que l'on sépare par filtration ensuite l'halogénure alcalin formé et que l'on sépare par distillation le produit désiré.

3. Procédé selon la revendication 2, caractérisé en ce que l'on utilise le cyclopentadiène-sodium et le tétrahydrofurane.

4. Procédé d'obtention de cyclopentadiène bis substitué par un silyl selon la revendication 1, caractérisé en ce que l'on prépare sous gaz de protection, une suspension d'hydrure de sodium dans un solvant organique polaire aprotique et que l'on ajoute par petites portions à 50 à 55°C la quantité équimoléculaire de cyclopentadiène mono-substitué par un silyl, que l'on agite ensuite pendant 1,0 à 4 sous reflux, que l'on sépare le cas échéant, après refroidissement l'excès d'hydrure de sodium que l'on ajoute à la solution réactionnelle à 0 à 150°C — de préférence à température ordinaire — goutte à goutte un halogénure de silylalcoyle selon la formule (II), que l'on élimine l'halogénure de sodium qui a précipité après achèvement de la réaction et que l'on sépare par distillation le produit désiré.

5. Procédé selon la revendication 4, caractérisé en ce que l'on met en œuvre en tant que solvant organique, le tétrahydrofurane (THF).

6. Mélanges à base de caoutchoucs et de matières plastiques renforcés avec des substances de remplissage silicatés réticulables avec des peroxydes, qui renferment de 0,2 à 10 parties de cyclopentadiène substitué par un silyl selon la revendication 1, calculé par rapport à la substance de remplissage silicatée.

7. Procédé d'obtention et de formage des mélanges selon la revendication 6, caractérisé en ce que l'on mélange tout d'abord dans un mélangeur interne tournant rapidement durant une période de 2 à 30 minutes avec un nombre de tours de 20 à 120 par minute et avec une température du mélangeur interne initiale de 30 à 110°C, le caoutchouc ou la matière plastique avec la substance de remplissage silicatée (en une ou plusieurs portions égales consécutives), ajoute à ce mélange de l'huile de travail ou de plastification et un cyclopentadiène substitué par un silyl selon la formule (I) et ensuite on ajoute l'agent de protection contre le vieillissement et contre les UV et mélange la masse résultante sur des cylindres de mélange à une température de mélange de 40 à 100°C, pour laquelle durant une période de 1 à 10 minutes l'agent de réticulation peroxyde est inclus d'une manière égale et ensuite après l'avoir retiré du dispositif des cylindres de mélanges, le mélange est transformé en corps en forme, à des températures de 100 à 300°C.